(19) **Europäisches Patentamt / European Patent Office / Office européen des brevets**

(11) **EP 4 160 881 B1**

(12) **EUROPEAN PATENT SPECIFICATION**

(45) Date of publication and mention
of the grant of the patent:
**29.07.2026 Bulletin 2026/31**

(21) Application number: **22198602.9**

(22) Date of filing: **29.09.2022**

(51) International Patent Classification (IPC):
*H02K 3/52* (2006.01)    *H02K 3/38* (2006.01)
*H02K 9/22* (2006.01)    *H02K 21/16* (2006.01)
*H02K 11/33* (2016.01)

(52) Cooperative Patent Classification (CPC):
**H02K 3/522; H02K 3/38; H02K 9/223; H02K 9/227;
H02K 11/33; H02K 21/16;** H02K 2203/03;
H02K 2203/12

(54) **MOTOR**

MOTOR

MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2021  JP 2021162626**

(43) Date of publication of application:
**05.04.2023 Bulletin 2023/14**

(73) Proprietor: **Minebea Mitsumi Inc.
Kitasaku-gun
Nagano 389-0293 (JP)**

(72) Inventors:
• YAMADA, Takuji
  Nagano 389-0293 (JP)
• TAMURA, Youko
  Nagano 389-0293 (JP)

(74) Representative: **Dennemeyer & Associates S.A.
55, rue des Bruyères
1274 Howald (LU)**

(56) References cited:
EP-A1- 3 528 371        WO-A1-2014/115775
WO-A1-2018/193095    WO-A1-2021/171426
JP-A- H07 274 476        US-A1- 2015 162 798
US-A1- 2018 083 516

# EP 4 160 881 B1

**Description**

Technical Field

The present invention relates to a motor.

Background Art

In a rotary electric machine such as a motor, a technique for efficiently dissipating heat generated from a coil of a stator is known.

Encapsulated electric motor stators are disclosed in prior art documents EP 4 113 789 A1, US 2018/083516 A1, WO 2013/069685 A1, EP 3 528 371 A1, JP 07-274476 A, WO 2014/115775 A1, WO 2018/193095 A1, JP 2003-158842 A, JP 2011-067069 A, and JP 8-182271 A.

Summary of Invention

Technical Problem

Heat generated from a coil contributes to a motor efficiency reduction. Therefore, the heat generated from the coil is preferably dissipated to the outside.

In one aspect, an object is to provide a motor capable of improving motor efficiency.

Solution to Problem

In one aspect, a motor includes a rotor including a magnet, a stator having a side surface opposing the magnet in a radial direction, a substrate, and a resin member covering the substrate and the stator. The stator includes a stator core, an insulating member covering the stator core, and a coil wound around the insulating member. The resin member forms a side surface of the stator in the radial direction, an inner peripheral part of the insulating member is covered with the resin member, and thermal emissivity of the resin member is smaller than thermal emissivity of the insulating member.

According to one aspect, the motor efficiency can be improved.

Brief Description of Drawings

FIG. 1 is a perspective view illustrating an example of a mold stator according to an embodiment.
FIG. 2 is a perspective view illustrating an example of a motor before a stator is covered with a resin member according to an embodiment.
FIG. 3 is an exploded perspective view illustrating an example of the motor before the stator is covered with the resin member according to the embodiment.
FIG. 4 is a perspective view illustrating an example of a stator core with an insulator mounted according to the embodiment.
FIG. 5 is a cross-sectional view illustrating an example of the motor before the stator is covered with the resin member according to the embodiment.
FIG. 6 is an enlarged perspective view illustrating an example of the stator before being covered with the resin member according to the embodiment.
FIG. 7 is an enlarged perspective view illustrating an example of the mold stator according to the embodiment.
FIG. 8 is a cross-sectional view illustrating an example of the mold stator according to the embodiment.
FIG. 9 is another cross-sectional view illustrating an example of the mold stator according to the embodiment.
FIG. 10 is a side cross-sectional view illustrating an example of the mold stator according to the embodiment.
FIG. 11 is another side cross-sectional view illustrating an example of the mold stator according to the embodiment.
FIG. 12 is a side cross-sectional view illustrating an example of the motor including the mold stator according to the embodiment.
FIG. 13 is a side cross-sectional view illustrating an example of a mold stator according to a first modification.
FIG. 14 is a side cross-sectional view illustrating an example of a motor including a mold stator according to a second modification.
FIG. 15 is a perspective view illustrating an example of an insulator wound around with a coil according to a third modification.

Description of Embodiments

An embodiment of a motor disclosed in the present application will be elaborated below with reference to the drawings. Note that the dimensional relationships, the proportions, and the like between elements in the drawings may differ from those in reality. Among the drawings, parts having mutually different dimensional relationships and proportions may be included.

Embodiments

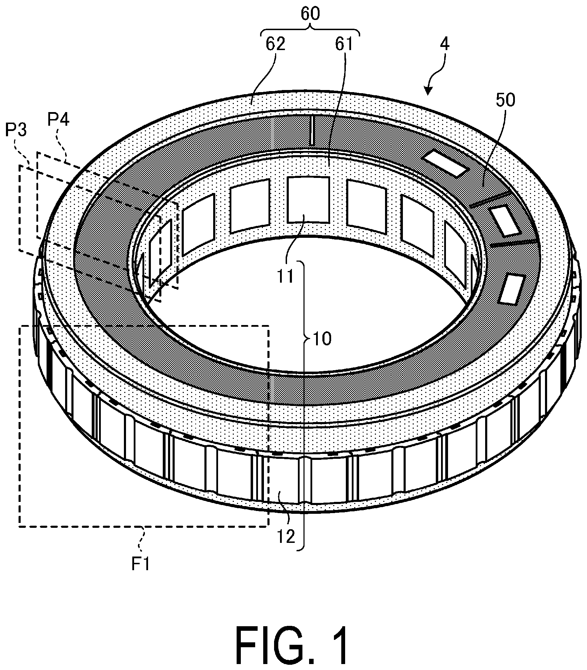

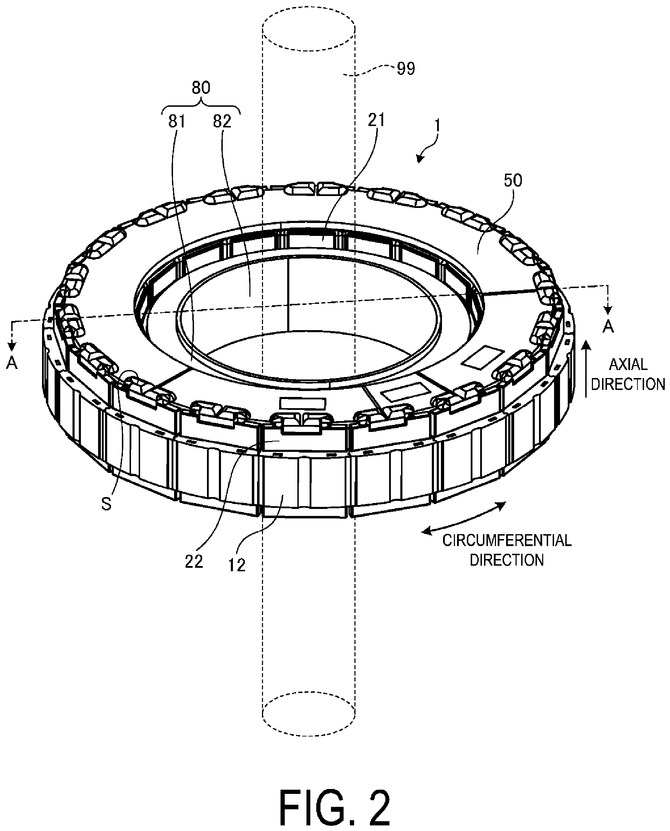

First, a motor of an embodiment will be described with reference to FIG. 1 and FIG. 2. FIG. 1 is a perspective view illustrating an example of a mold stator of the embodiment. FIG. 2 is a perspective view illustrating an example of a motor before a stator is covered with a resin member according to the embodiment. As illustrated in FIG. 1 and FIG. 2, a motor 1 of the embodiment includes a mold stator 4, a rotor 80, and a shaft 99. The motor 1 is housed in, for example, a housing not illustrated. In the following, the stator before being covered with a resin member 60 to be described later may be referred to as a stator 2, and the stator covered with the resin member 60 may be referred to as the mold stator 4. The rotor 80 and the shaft 99 in the embodiment are mounted after the stator 2 is covered with the resin member 60.

The rotor 80 is disposed at an inner side of the mold stator 4 in a radial direction. As illustrated in FIG. 2, the rotor 80 includes a magnet 81 and a rotor core 82. The magnet 81 is, for example, a tubular magnet fixed to an outer peripheral surface of the rotor core 82. The magnet 81 is formed of a rare earth magnet such as a neodymium magnet. A bond magnet or a sintered magnet may also be used. The magnet 81 is not limited to the tubular magnet, and a cylindrical magnet or a polygonal magnet may be used. The magnet 81 is not only fixed to the outer peripheral surface but also may be embedded in the rotor core 82.

The shaft 99 is fixed to an inner peripheral surface of the rotor 80, for example, and transmits a driving force to the outside. In the following drawings, the illustration of the shaft 99 may be omitted.

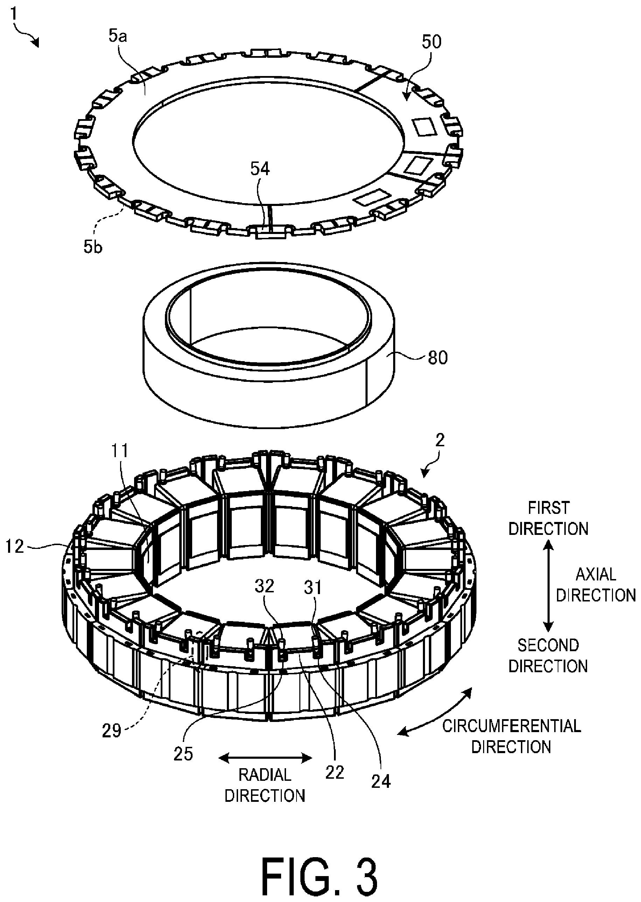

In the embodiment the mold stator 4 is formed by mounting a substrate 50 on the stator 2 and covering the stator 2 with the resin member 60, as illustrated in FIG. 1 to FIG. 3. FIG. 3 is an exploded perspective view illustrating an example of the motor before the stator is covered with the resin member according to the embodiment. As illustrated in FIG. 1 to FIG. 3, the stator 2 includes a stator core 10, an insulator 20, and a coil 30. The insulator 20 is an example of an insulating member.

In the embodiment, the stator 2 is disposed surrounding the rotor 80. The stator core 10 constituting the stator 2 is, for example, disposed along a circumferential direction in an annular shape. The stator core 10 is formed by stacking, in an axial direction, a plurality of plate-shaped metal members such as soft magnetic steel plates including a silicon steel plate or an electromagnetic steel plate.

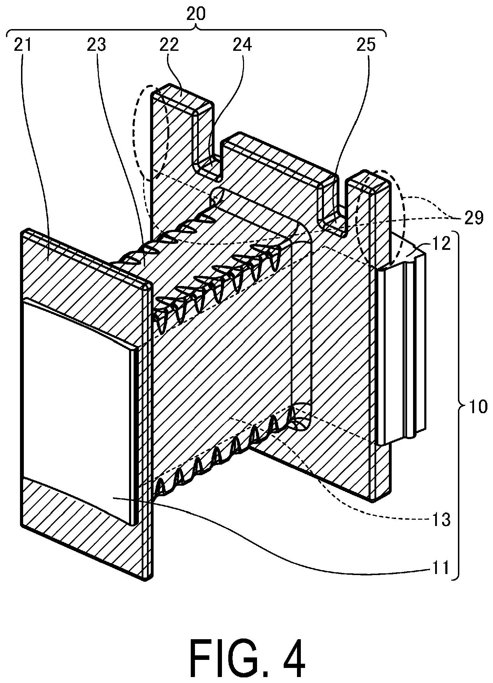

The insulator 20 is formed of an insulating material, such as resin. The insulator 20 covers the stator core 10 from a first direction side and a second direction side in the axial direction. FIG. 4 is a perspective view illustrating an example of the stator core with the insulator mounted according to the embodiment. As illustrated in FIG. 4, the stator core 10 includes a side surface 11 at the inner peripheral side, a side surface 12 at the outer peripheral side, and a coupling part 13. In the embodiment, a surface area of the side surface 12 at the outer peripheral side is greater than a surface area of the side surface 11 at the inner peripheral side. A surface area of the resin member 60 at the side surface 12 at the outer peripheral side is greater than a surface area of the resin member 60 at the side surface 11 at the inner peripheral side.

The insulator 20 includes an inner peripheral part 21, an outer peripheral part 22, and a coupling part 23. The outer peripheral part 22 includes two recess parts 24 and 25 notched in the second direction of the axial direction. Both end parts of the outer peripheral part 22 in the circumferential direction form gaps 29 with other insulators 20. The outer peripheral part 22 is an example of a wall part. With the insulator 20 mounted on the stator core 10, the coupling part 13 of the stator core 10 is fully covered by the coupling part 23 of the insulator 20 and is therefore not visible in FIG. 4.

The coil 30 is formed by winding a conducting wire around the stator 2 via the insulator 20. As illustrated in FIG. 3, a first end part 31 and a second end part 32 of the conducting wire are taken out as outgoing lines from the coil 30 in the same direction (first direction).

In the embodiment, the stator 2 is formed by arranging, in an annular shape, the stator core 10 wound around with the coil 30 via the insulator 20. In this case, as illustrated in FIG. 3, the gap 29 is formed between the outer peripheral parts 22 of the insulators 20 adjacent to each other in the circumferential direction.

As illustrated in FIG. 3, the substrate 50 formed in an annular shape to oppose the stator 2 in the axial direction is disposed at the first direction side in the axial direction of the stator 2. The substrate 50 is, for example, a multi-layer substrate with a plurality of layers of a resin material having insulating properties, such as epoxy, formed and wiring of conductive members provided between the layers. Electronic components (not illustrated) are disposed on the substrate 50. Examples of the electronic component include a capacitor, a resistor, an inverter, and an IC.

The substrate 50 includes a surface 5a at the first direction side in the axial direction and a surface 5b at the second direction side in the axial direction. As illustrated in FIG. 3, the substrate 50 is disposed being directly supported by the stator 2 in such a manner that the surface 5b opposes the stator 2 in the axial direction, for example.

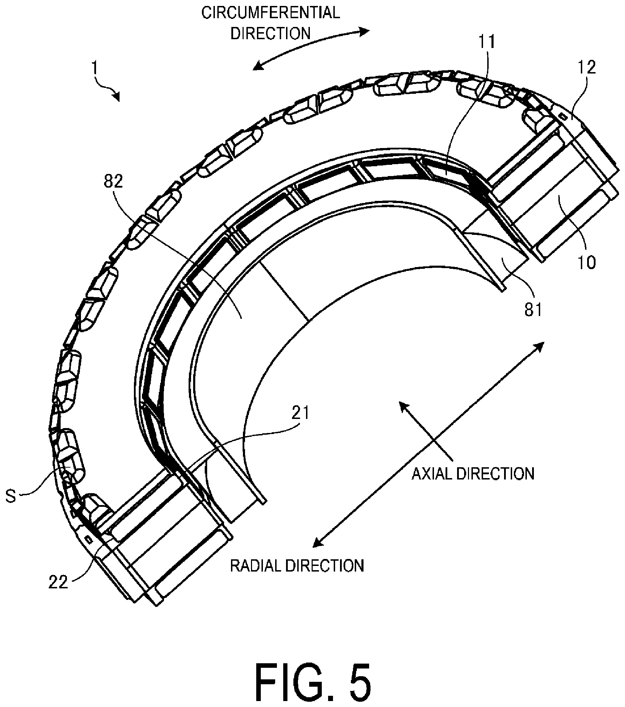

As illustrated in FIG. 3, a land 54 is formed at the surface 5a of the substrate 50. The land 54 is a connection part formed of a conductive member and connected to the first end part 31 and second end part 32 of the conducting wire. As will be described later, the first end part 31 and second end part 32 of the conducting wire taken out from the coil 30 are physically and electrically connected to the land 54 by solder S illustrated in FIG. 5. Note that the solder S is an alloy. FIG. 5 is a cross-sectional view illustrating an example of the motor before the stator is covered with the resin member according to the embodiment. FIG. 5 illustrates a cross section taken along a line A-A in FIG. 2. The land 54 is covered with the solder S, and therefore is not visible in FIG. 2 and FIG. 5.

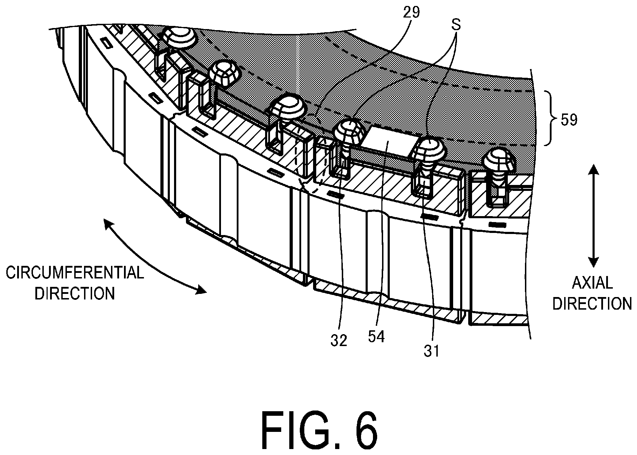

As illustrated in FIG. 5, in the embodiment, the substrate 50 is supported by both the inner peripheral part 21 and the outer peripheral part 22 of the insulator 20 in the axial direction. As illustrated in FIG. 5 and FIG. 6, the land 54 of the substrate 50 is connected to the first end part 31 and the second end part 32 of the coil 30 with the solder S. FIG. 6 is an enlarged perspective view illustrating an example of the stator before being covered with the resin member according to the embodiment. FIG. 6 is an enlarged view of a part illustrated in a frame F1 of FIG. 1. As illustrated in FIG. 6, the stator 2 is fixed with the substrate 50 and is set in the molding box, to be filled in with the resin member 60. In FIG. 6, the illustration of the land 54 is omitted except for a part assigned with the reference signs.

The resin member 60 is formed in such a manner that a liquid-state resin being set in the molding box and filling the molding box is cured, for example. The resin member 60 may be a thermosetting resin, or a thermoplastic resin may be used. In the embodiment, the resin member 60 is formed of a second resin different from a first resin forming the insulator 20.

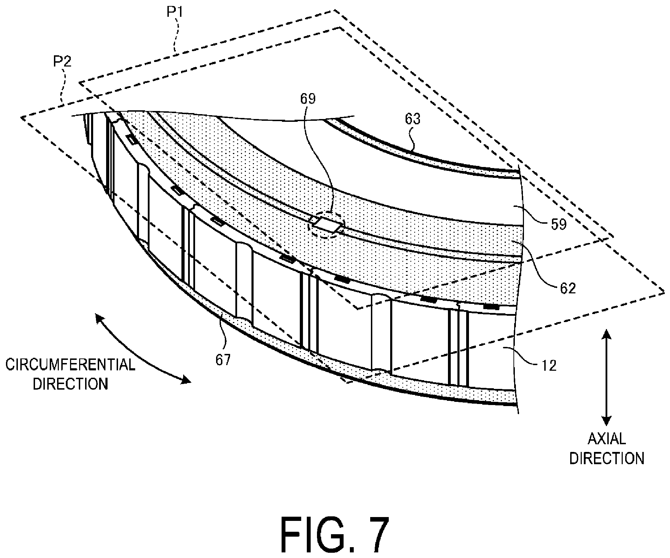

The second resin forming the resin member 60 is injected, for example, from the gap 29 formed between two insulators 20 disposed adjacent to each other in the circumferential direction indicated in FIG. 6. That is, a gate for injecting the second resin is provided at the gap 29. In this case, an injection mark 69 of the second resin is formed at a position corresponding to the gap 29 of the mold stator 4, as illustrated in FIG. 7. FIG. 7 is an enlarged perspective view illustrating an example of the mold stator of the embodiment. When filled with the second resin, the surface 5a of the substrate 50 is covered with the resin member 60 excluding an exposed part 59 surrounded by a broken line, as illustrated in FIG. 7.

In the mold stator 4 illustrated in FIG. 7, a part at the inner peripheral side of the surface 5a of the substrate 50 is in contact with an inner peripheral part 63 of the resin member 60, and a part at the outer peripheral side of the surface 5a of the substrate 50 is covered by a step part 62 described below. Further, in the mold stator 4, the solder S and the insulator 20 in addition to the part other than the exposed part 59 of the substrate 50 are also covered with the resin member 60 and therefore not visible.

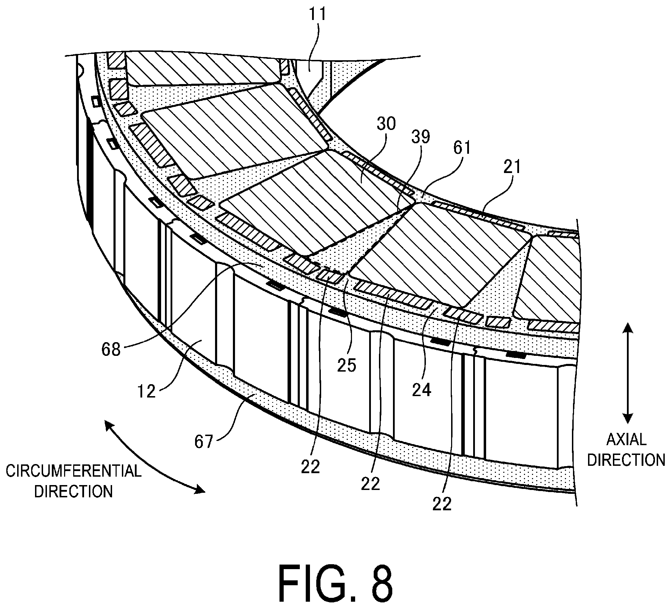

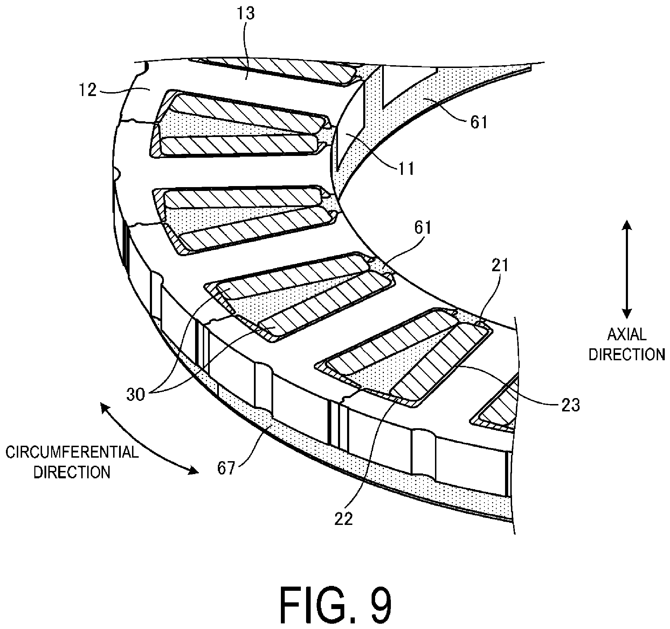

The second resin injected for the filling from the gap 29 penetrates into the whole stator 2 along the gap between the insulators 20 disposed adjacent to each other in the circumferential direction, as illustrated in FIG. 8 and FIG. 9. FIG. 8 is a cross-sectional view illustrating an example of the mold stator of the embodiment. FIG. 9 is another cross-sectional view illustrating an example of the mold stator of the embodiment. FIG. 8 illustrates a cross section taken along a plane P1 in FIG. 7, and FIG. 9 illustrates a cross section taken along a plane P2 in FIG. 7.

The second resin penetrates into the inner peripheral side in the radial direction via gaps 39 of the coil 30 disposed adjacent to each other in the circumferential direction, for example. In this case, as illustrated in FIG. 8, the second resin forms a side surface 61 at the inner peripheral side covering an inner peripheral part 21 of the insulator 20 from the inner side in the radial direction. That is, in the mold stator 4 of the embodiment, the inner peripheral part 21 of the insulator 20 is covered by the side surface 61 at the inner peripheral side of the resin member 60, and therefore is not visible.

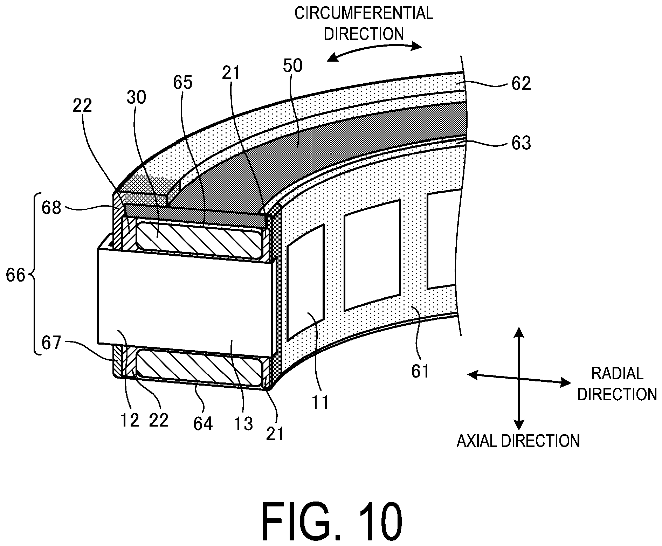

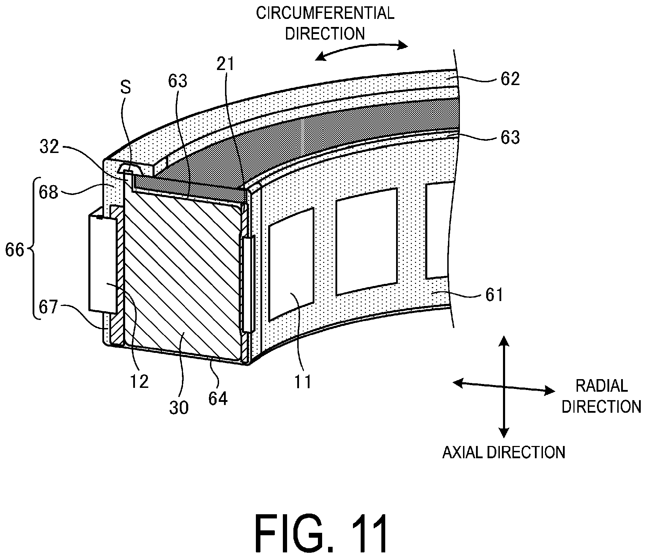

On the other hand, in the embodiment, the side surface 11 at the inner peripheral side of the stator core 10 is exposed toward the inner side in the radial direction without being covered with the second resin, as illustrated in FIG. 8 to FIG. 11. FIG. 10 is a side cross-sectional view illustrating an example of the mold stator of the embodiment. FIG. 11 is another side cross-sectional view illustrating an example of the mold stator of the embodiment. FIG. 10 illustrates a cross section taken along a plane P3 in FIG. 1, and FIG. 11 illustrates a cross section taken along a plane P4 in FIG. 1.

The second resin also penetrates toward the second direction side in the axial direction of the coil 30 via the gap 39 of the coil 30 illustrated in FIG. 9. In this case, the second resin further forms a bottom surface 64 covering the coil 30 from the second direction side in the axial direction as illustrated in FIG. 10 and FIG. 11. Furthermore, as illustrated in FIG. 10 and FIG. 11, part of the second resin having penetrated forms a part 67 of an outer peripheral surface 66 of the resin member 60.

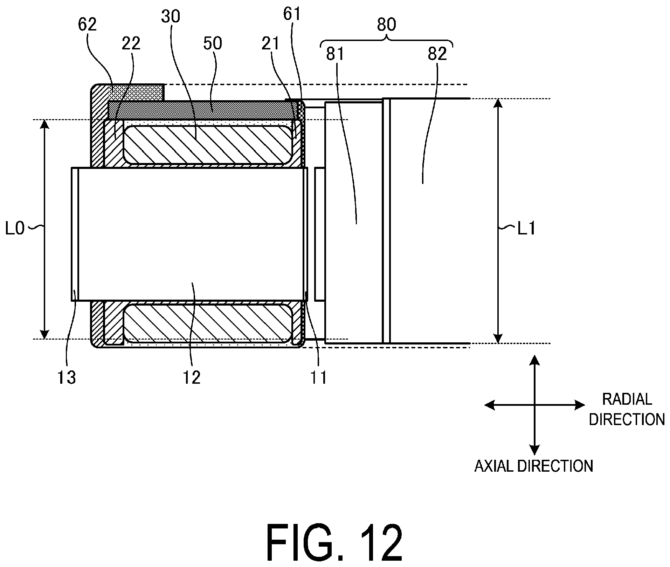

The side surface 61 at the inner peripheral side of the resin member 60 also covers an end part at the inner peripheral side of the substrate 50. In this case, a length L1 of the rotor 80 in the axial direction in the embodiment is larger than a length L0 of the insulator 20 in the axial direction as illustrated in FIG. 12. FIG. 12 is a cross-sectional view illustrating an example of the motor including the mold stator according to the embodiment. That is, as illustrated in FIG. 12, the substrate 50 of the embodiment may oppose the rotor 80 across the side surface 61 at the inner peripheral side of the resin member 60 in the radial direction.

Part of the second resin injected for the filling from the gap 29 penetrates toward both sides in the circumferential direction and toward the first direction side in the axial direction, so as to form another part 68 of the outer peripheral surface 66. In this case, part of the second resin penetrates toward the inner side in the radial direction on the first direction side in the axial direction relative to the substrate 50, so as to form the step part 62. The step part 62 projects toward the first direction side in the axial direction relative to the inner peripheral part 63.

Furthermore, the second resin also penetrates into a gap between the substrate 50 and the coil 30 in the axial direction. In this case, as illustrated in FIG. 10 and FIG. 11, the second resin forms a supporting part 65 in contact with the substrate 50 in the axial direction. Specifically, in the axial direction, the supporting part 65 makes contact with a part of the surface 5b of the substrate 50 not in contact with the inner peripheral part 21 or the outer peripheral part 22 of the insulator 20. In other words, the surface 5b of the substrate 50 makes contact with the inner peripheral part 21 and the outer peripheral part 22 of the insulator 20, and the supporting part 65 of the resin member 60.

As described above, the side surface 61 at the inner peripheral side of the resin member 60 covers the inner peripheral part 21 of the insulator 20, forming a side surface at the inner side in the radial direction of the mold stator 4. On the other hand, the side surface 11 at the inner peripheral side of the stator core 10 is not covered with the resin member 60, and thus is exposed from the resin member 60. In this case, the side surface at the inner side in the radial direction of the mold stator 4 is formed by the side surface 61 at the inner peripheral side of the resin member 60 and the side surface 11 at the inner peripheral side of the stator core 10. As illustrated in FIG. 8 to FIG. 11, the side surface 61 at the inner peripheral side of the resin member 60 is formed to be substantially flush with the side surface 11 at the inner peripheral side of the stator core 10.

In the embodiment, the second resin forming the resin member 60 includes, for example, aluminum or silicon. In this case, the rigidity of the first resin forming the insulator 20 is, for example, greater than the rigidity of the second resin. In the embodiment, the thermal conductivity of the second resin is greater than the thermal conductivity of the first resin, whereas the thermal emissivity of the second resin is smaller than the thermal emissivity of the first resin.

In this case, the heat generated from the coil 30 is more easily conducted to the resin member 60 in contact with the coil 30 than to the insulator 20 in contact with the coil 30. On the other hand, the heat conducted from the coil 30 to the resin member 60 is unlikely to be emitted to the magnet 81 of the rotor 80 on the inner side in the radial direction. The heat conducted to the resin member 60 is more easily conducted to other parts of the resin member 60 than to the insulator 20 and may be dissipated form the side surface or the like at the outer peripheral side of the resin member 60.

In the embodiment, the thermal conductivity of the resin member 60 is higher than the thermal conductivity of the insulator 20, and the thermal emissivity of the resin member 60 is lower than the thermal emissivity of the insulator 20, so that the heat generated in the coil 30 is more easily conducted to the resin member 60 than to the insulator 20. In this case, thermal conduction from the coil 30 to the resin member 60 is related to an overall heat transfer coefficient K of the resin member 60 and the stator 2. For example, the overall heat transfer coefficient K is calculated by Expression (1) given below when the heat transfer coefficient of the resin member 60 is taken as $\alpha$, the heat transfer coefficient of the stator 2 is taken as $\beta$, and the heat transfer coefficient of the substrate 50 is taken as $\gamma$.

$$1/K = (1/\alpha) + (1/\beta) + (1/\gamma) \text{ Expression (1)}$$

In this case, when a heat dissipation amount indicated in Expression (2) given below is larger than a heat generation amount Q of the coil 30, the heat conducted from the coil 30 to the resin member 60 is released to the outside of the motor 1 through the stator 2, the substrate 50, and the housing (not illustrated) of the motor 1, so that a temperature rise of the motor 1 may be suppressed. Note that in the following mathematical expression, S1 represents a surface area of the resin member 60, S2 represents a surface area of a part of the stator 2 exposed from the resin member 60, and S3 represents a surface area of the exposed part 59 of the substrate 50.

$$Q < (1/((1/\alpha) + (1/\beta)) + (1/\gamma)) * (S1 + S2 + S3) \text{ Expression (2)}$$

The heat generated from the coil 30 is also dissipated from the side surface 61 at the inner peripheral side of the resin member and the side surface 11 at the inner peripheral side of the stator core 10. The heat dissipated from the side surface 61 at the inner peripheral side of the resin member and the side surface 11 at the inner peripheral side of the stator core 10 is transmitted to the magnet 81 of the rotor 80 and causes to a reduction in efficiency of the motor 1. Accordingly, it is desirable that the ratio of the surface area of the side surface 61 at the inner peripheral side of the resin member and the surface area of the side surface 11 at the inner peripheral side of the stator core 10 to the total of the surface area S1 of the resin member 60 and the surface area S2 of the stator core 10 indicated in Expression (2) be small. By making the surface area of the outer peripheral surface 66 of the resin member larger than the surface area of the side surface 61 at the inner peripheral side of the resin member, a larger amount of heat may be dissipated from the outer peripheral surface 66 of the resin member 60.

As describe above, the motor 1 of the embodiment includes the rotor 80 having the magnet 81, the stator 2 having the side surface 11 opposing the magnet 81 in the radial direction, the substrate 50, and the resin member 60 covering the substrate 50 and the stator 2. The stator 2 includes the stator core 10, the insulator 20 covering the stator core 10, and the coil 30 wound around the insulator 20. The resin member 60 forms the side surface 61 of the stator 2 in the radial direction, the inner peripheral part 21 of the insulator 20 is covered with the resin member 60, and the thermal emissivity of the resin member 60 is smaller than the thermal emissivity of the insulator 20. According to this configuration, the heat generated in the coil 30 is conducted to the resin member 60 and dissipated to the outside of the motor 1, and thus the efficiency of the motor may be improved. In particular, because the step part 62, the bottom surface 64, and the like are formed in the resin member 60, the ratio of the surface area in the resin member 60 increases, enabling reduced amount of heat conducted from the resin member 60 to the magnet 81 and increased amount of exhaust heat.

The inner peripheral part 21 and the outer peripheral part 22 of the insulator 20 support the substrate 50 in the axial direction, and other parts of the substrate 50 are in contact with the resin member 60 in the axial direction. This configuration makes it possible to suppress positional misalignment, deformation, and the like of the substrate 50.

Furthermore, the outer peripheral part 22 of the insulator 20 is provided with a plurality of wall parts arranged in the circumferential direction and spaced by the predetermined gap 29, and the injection mark 69 of the resin for constituting the resin member 60 is formed at a part of the resin member 60 located at the predetermined gap 29. By forming the gate mark at the gap 29 between the insulators 20 in this way, the inflow path of the resin may be widened, and the fluidity of the resin may be improved. As a result, insufficient filling, the generation of a void and a weld line, and the like of the mold resin may be suppressed.

Modifications

The configurations of the embodiment have been described thus far, but the embodiment is not limited to these configurations. For example, in the embodiment, the second resin for constituting the resin member 60 is injected from any one of the gaps 29 of a plurality of the insulators 20 but is not limited to being injected in this manner and may be injected from a plurality of the gaps 29.

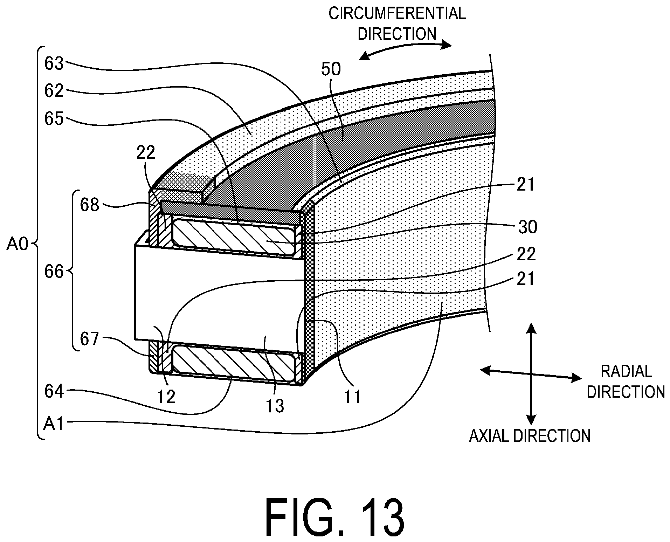

The configuration such that the stator core 10 is exposed without being covered by the resin member 60 is described above, but such a configuration may be employed that the resin member covers the stator core 10 in addition to the insulator 20 as long as the heat dissipation effect and the circularity of the stator 2 can be ensured. For example, as illustrated in FIG. 13, a side surface A1 at the inner peripheral side of a resin member A0 may be disposed over the entire periphery. FIG. 13 is a side cross-sectional view illustrating an example of a mold stator according to a first modification. As illustrated in FIG. 13, the side surface 11 at the inner peripheral side of the stator core 10 in the first modification is covered by the side surface A1 at the inner peripheral side of the resin member A0 and is not exposed to the rotor 80 (not illustrated). Such a configuration allows the heat conduction from the side surface 11 at the inner peripheral side of the stator core 10 to the rotor 80 located at the inner peripheral side to be suppressed, enabling the motor efficiency to be further improved.

The length of the magnet 81 in the axial direction in the embodiment and the length of a magnet B1 in a second modification are smaller than the length L1 of the rotor 80 in the axial direction and a length L2 of the rotor B0, respectively, but the embodiment is not limited to the above-mentioned lengths. For example, the length of the magnet 81 in the axial direction may be substantially the same as the length of the rotor 80 in the axial direction or may be larger than the length of the rotor core 82 in the axial direction.

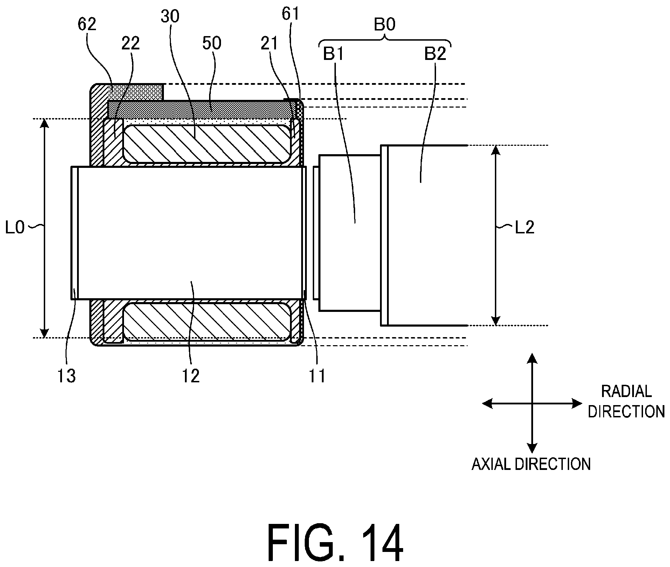

The length of the entire rotor in the axial direction is an example, and may be substantially the same as the length L0 of the insulator 20 in the axial direction or may be shorter than a length L0 of the insulator 20 in the axial direction as illustrated in FIG. 14. FIG. 14 is a side cross-sectional view illustrating an example of a motor including a mold stator in the second modification. In this case, as illustrated in FIG. 14, the substrate 50 need not oppose the magnet B1 or a rotor core B2 of the rotor B0 across the side surface 61 at the inner peripheral side of the resin member 60 in the radial direction.

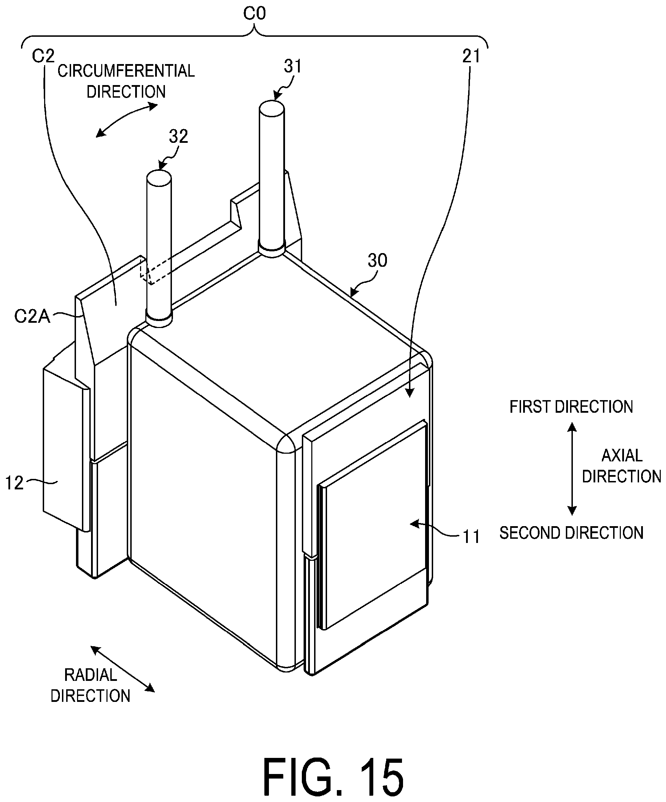

The shape of the insulator 20 is not limited to the shape illustrated in FIG. 4. For example, as illustrated in FIG. 15, an outer peripheral part C2 of an insulator C0 may have a shape including a taper C2A, for example, may be configured such that the thickness of the outer peripheral part C2 in the radial direction changes continuously in the axial direction, and the outer peripheral part 22 may be configured to include none of the recess parts 24 and 25. FIG. 15 is a perspective view illustrating an example of the insulator wound around with a coil according to a third modification. For example, as illustrated in FIG. 15, the insulator C0 in the third modification includes the taper C2A instead of the recess parts 24 and 25 of the insulator 20 in the embodiment. With this, when the first end part 31 and the second end part 32 of the conducting wire taken out from the coil 30 are to be connected to the substrate 50, the end parts 31 and 32 of the conducting wire may be allowed to leave for the taper C2A side of the insulator 20 prepared on the outer side in the radial direction.

The embodiment and the modifications of the present invention have been described, but the present invention is not limited to the embodiment and the modifications but can be variously modified without departing from the scope of the present invention.

**EP 4 160 881 B1**

Reference Signs List

1 Motor
2 Stator
4 Mold stator
10 Stator core
11 Side surface at inner peripheral side
12 Side surface at outer peripheral side
13 Coupling part
20, C0 Insulator
21 Inner peripheral part
22, C2 Outer peripheral part
23 Coupling part
29 Gap
30 Coil
31 First end part
32 Second end part
50 Substrate
54 Land
59 Exposed part
60, A0 Resin member
61, A1 Side surface at inner peripheral side
62 Step part
63 Inner peripheral part
64 Bottom surface
65 Supporting part
66 Outer peripheral surface
69 Injection mark
80, B0 Rotor
81, B1 Magnet
82, B2 Rotor core
99 Shaft

**Claims**

1. A motor (1), comprising:

   a rotor (80) including a magnet (81); fixed to an outer peripheral surface of, or embedded in, a rotor core (82),
   a stator (2) having a side surface (61, 11) opposing the magnet (81) in a radial direction;
   a substrate (50) with electronic components disposed thereon; and
   a resin member (60) covering the substrate (50) and the stator (2), the stator (2) formed by arranging, in annular shape, multiple segments, each being a stator core (10),
   an insulating member (20) covering the stator core (10), and
   a coil (30) wound around said stator core (10) via said insulating member (20), the motor being further **characterized in that**
   a side surface (61) of the resin member (60) forms a part of the side surface of the stator (2) opposing the magnet (81) in the radial direction,
   a side surface (21) of the insulating member (20) is adjacent to the side surface (61) of resin member (60), and **in that**
   said side surface (61) of the resin member (60) covers said side surface (21) of the insulating member (20) and eventually exposing a side surface (11) of the stator core (10) at the inner peripheral side towards the inner radial side, and wherein
   the thermal conductivity of the resin member (60) is higher than the thermal conductivity of the insulating member (20), and the thermal emissivity of the resin member (60) is lower than the thermal emissivity of the insulating member (20).

**2.** The motor (1) according to claim 1,
wherein the rigidity of the insulating member (20) is greater than the rigidity of the resin member (60).

**3.** The motor (1) according to claim 1 or 2,
wherein the resin member (60) includes aluminum or silicon.

**4.** The motor (1) according to any one of claims 1 to 3,
wherein the side surface of the stator (2) is formed of the side surface of the resin member (60) and the stator core (10).

**5.** The motor (1) according to any one of claims 1 to 4,
wherein the resin member (60) is in contact with an inner radial peripheral part of the substrate (50).

**6.** The motor (1) according to any one of claims 1 to 5,

wherein the radial inner peripheral part (21) and the radial outer peripheral part (22) of the insulating membe (20) support the substrate (50) in an axial direction, and
other parts of the substrate (50) are in contact with the resin member (60) in the axial direction.

**7.** The motor according to any one of claims 1 to 6,

wherein the outer peripheral part (22) of the insulating member (20) is provided with a plurality of wall parts , such as outer peripheral parts (22), arranged in a circumferential direction and spaced by a predetermined gap (29), and
an injection mark (69) of a resin forming the resin member (60) is formed at a part of the resin member (60) located at the predetermined gap.

**8.** The motor (1) according to any one of claims 1 to 7,

wherein the resin member (60) covers an outer peripheral part of the substrate (50), and
a step part is provided at the resin member (60) covering the outer peripheral part of the substrate (50).

**9.** The motor (1) according to claim 8,

wherein an outer radial peripheral part of a surface (5a) of the substrate (50) is covered by a step part (62) of the resin member (60), and
a part of the surface of the substrate (50) at an inner peripheral side from the outer peripheral part is exposed from the resin member (60).

**10.** The motor (1) according to any one of claims 1 to 9,

wherein the rotor (80) is located at an inner peripheral side of the stator (2), and
the insulating member (20) is covered with the resin member (60), and the stator core (10) is exposed, at the side surface of the stator (2) opposing the magnet (81).

**Patentansprüche**

**1.** Motor (1), umfassend:

einen Rotor (80), der einen Magneten (81) einschließt; befestigt an einer Außenumfangsfläche eines Rotorkerns (82) oder darin eingebettet,
einen Stator (2) mit einer Seitenfläche (61, 11), die dem Magneten (81) in einer radialen Richtung gegenüberliegt:

ein Substrat (50), mit darauf angeordneten elektronischen Komponenten; und
ein Harzelement (60), das das Substrat (50) und den Stator (2) abdeckt,
wobei der Stator (2) durch die ringförmige Anordnung mehrerer Segmente gebildet ist, wobei jedes ein Statorkern (10) ist,
ein Isolierelement (20), das den Statorkern (10) abdeckt, und

eine Spule (30), die über das Isolierelement (20) um den Statorkern (10) gewickelt ist, wobei der Motor ferner **dadurch gekennzeichnet ist, dass**

eine Seitenfläche (61) des Harzelements (60) einen Teil der Seitenfläche des Stators (2) bildet, die dem Magneten (81) in der radialen Richtung gegenüberliegt, eine Seitenfläche (21) des Isolierelements (20) benachbart zu der Seitenfläche (61) des Harzelements (60) ist, und dadurch, dass die Seitenfläche (61) des Harzelements (60) die Seitenfläche (21) des Isolierelements (20) abdeckt und schließlich eine Seitenfläche (11) des Statorkerns (10) an der inneren Umfangsseite in Richtung der inneren radialen Seite freilegt, und wobei die Wärmeleitfähigkeit des Harzelements (60) höher ist als die Wärmeleitfähigkeit des Isolierelements (20) und das thermische Emissionsvermögen des Harzelements (60) niedriger ist als das thermische Emissionsvermögen des Isolierelements (20).

2. Motor (1) nach Anspruch 1,
wobei die Steifigkeit des Isolierelements (20) größer ist als die Steifigkeit des Harzelements (60).

3. Motor (1) nach Anspruch 1 oder 2,
wobei das Harzelement (60) Aluminium oder Silizium einschließt.

4. Motor (1) nach einem der Ansprüche 1 bis 3,
wobei die Seitenfläche des Stators (2) aus der Seitenfläche des Harzelements (60) und dem Statorkern (10) gebildet ist.

5. Motor (1) nach einem der Ansprüche 1 bis 4,
wobei das Harzelement (60) mit einem inneren radialen Umfangsteil des Substrats (50) in Kontakt steht.

6. Motor (1) nach einem der Ansprüche 1 bis 5,

wobei der radiale innere Umfangsteil (21) und der radiale äußere Umfangsteil (22) des Isolierelements (20) das Substrat (50) in einer axialen Richtung stützen und
andere Teile des Substrats (50) in der axialen Richtung mit dem Harzelement (60) in Kontakt stehen.

7. Motor nach einem der Ansprüche 1 bis 6,

wobei der äußere Umfangsteil (22) des Isolierelements (20) mit einer Vielzahl von Wandteilen versehen ist, wie zum Beispiel äußeren Umfangsteilen (22), die in der Umfangsrichtung angeordnet und durch einen vorbestimmten Spalt (29) beabstandet sind und
eine Einspritzstelle (69) eines Harzes, das das Harzelement (60) bildet, an einem Teil des Harzelements (60) gebildet wird, der sich an dem vorbestimmten Spalt befindet.

8. Motor (1) nach einem der Ansprüche 1 bis 7,

wobei das Harzelement (60) einen äußeren Umfangsteil des Substrats (50) abdeckt, und
ein Stufenteil an dem Harzelement (60) bereitgestellt wird, das den äußeren Umfangsteil des Substrats (50) abdeckt.

9. Motor (1) nach Anspruch 8,

wobei ein äußerer radialer Umfangsteil einer Oberfläche (5a) des Substrats (50) durch einen Stufenteil (62) des Harzelements (60) abgedeckt ist und
ein Teil der Oberfläche des Substrats (50) an einer inneren Umfangsseite von dem äußeren Umfangsteil aus dem Harzelement (60) freiliegt.

10. Motor (1) nach einem der Ansprüche 1 bis 9,

wobei sich der Rotor (80) an einer inneren Umfangsseite des Stators (2) befindet und
das Isolierelement (20) mit dem Harzelement (60) abgedeckt ist, und der Statorkern (10) an der Seitenfläche des Stators (2), die dem Magneten (81) gegenüberliegt, freiliegt.

**Revendications**

1.  Moteur (1) comprenant :

    un rotor (80) incluant un aimant (81) ; fixé à une surface périphérique externe d'un noyau de rotor (82) ou intégrée dans celui-ci,
    un stator (2) présentant une surface latérale (61, 11) opposée à l'aimant (81) dans une direction radiale :

    un substrat (50) avec des composants électroniques disposés sur celui-ci ; et
    un élément de résine (60) recouvrant le substrat (50) et le stator (2),
    le stator (2) formé par l'agencement, dans une forme annulaire, de multiples segments, chacun étant un noyau de stator (10),
    un élément isolant (20) recouvrant le noyau de stator (10), et
    une bobine (30) enroulée autour dudit noyau de stator (10) par l'intermédiaire dudit élément isolant (20), le moteur étant en outre **caractérisé en ce que**
    une surface latérale (61) de l'élément de résine (60) forme une partie de la surface latérale du stator (2) opposée à l'aimant (81) dans la direction radiale,
    une surface latérale (21) de l'élément isolant (20) est adjacente à la surface latérale (61) de l'élément de résine (60), et **caractérisé en ce que** ladite surface latérale (61) de l'élément de résine (60) recouvre ladite surface latérale (21) de l'élément isolant (20) et expose éventuellement une surface latérale (11) du noyau de stator (10) au niveau du côté périphérique interne vers le côté radial interne, et dans lequel la conductivité thermique de l'élément de résine (60) est supérieure à la conductivité thermique de l'élément isolant (20), et l'émissivité thermique de l'élément de résine (60) est inférieure à l'émissivité thermique de l'élément isolant (20).

2.  Moteur (1) selon la revendication 1,
    dans lequel la rigidité de l'élément isolant (20) est supérieure à la rigidité de l'élément de résine (60).

3.  Moteur (1) selon la revendication 1 ou 2,
    dans lequel l'élément de résine (60) inclut de l'aluminium ou du silicone.

4.  Moteur (1) selon l'une quelconque des revendications 1 à 3,
    dans lequel la surface latérale du stator (2) est formée de la surface latérale de l'élément de résine (60) et du noyau de stator (10).

5.  Moteur (1) selon l'une quelconque des revendications 1 à 4,
    dans lequel l'élément de résine (60) est en contact avec une partie périphérique radiale interne du substrat (50).

6.  Moteur (1) selon l'une quelconque des revendications 1 à 5,

    dans lequel la partie périphérique interne radiale (21) et la partie périphérique externe radiale (22) de l'élément isolant (20) supportent le substrat (50) dans une direction axiale, et
    d'autres parties du substrat (50) sont en contact avec l'élément de résine (60) dans la direction axiale.

7.  Moteur selon l'une quelconque des revendications 1 à 6,

    dans lequel la partie périphérique externe (22) de l'élément isolant (20) dispose d'une pluralité de parties de paroi, telles que des parties périphériques externes (22), agencées dans une direction circonférentielle et espacées par un intervalle prédéterminé (29), et
    une marque d'injection (69) d'une résine formant l'élément de résine (60) est formée au niveau d'une partie de l'élément de résine (60) située au niveau de l'intervalle prédéterminé.

8.  Moteur (1) selon l'une quelconque des revendications 1 à 7,

    dans lequel l'élément de résine (60) recouvre une partie périphérique externe du substrat (50), et
    une partie étagée est disposée au niveau de l'élément de résine (60) recouvrant la partie périphérique externe du substrat (50).

9. Moteur (1) selon la revendication 8,

dans lequel une partie périphérique radiale externe d'une surface (5a) du substrat (50) est recouverte par une partie étagée (62) de l'élément de résine (60), et
une partie de la surface du substrat (50) au niveau d'un côté périphérique interne à partir de la partie périphérique externe est exposée à partir de l'élément de résine (60).

10. Moteur (1) selon l'une quelconque des revendications 1 à 9,

dans lequel le rotor (80) est situé au niveau d'un côté périphérique interne du stator (2), et
l'élément isolant (20) est recouvert avec l'élément de résine (60), et le noyau de stator (10) est exposé au niveau de la surface latérale du stator (2) opposée à l'aimant (81).

FIG. 1

FIG. 2

FIRST
DIRECTION

AXIAL
DIRECTION

SECOND
DIRECTION

CIRCUMFERENTIAL
DIRECTION

RADIAL
DIRECTION

# FIG. 3

FIG. 4

CIRCUMFERENTIAL
DIRECTION

AXIAL DIRECTION

RADIAL DIRECTION

# FIG. 5

FIG. 6

**FIG. 7**

FIG. 8

FIG. 9

FIG. 10

FIG. 11

FIG. 12

FIG. 13

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4113789 A1
- US 2018083516 A1
- WO 2013069685 A1
- EP 3528371 A1
- JP 7274476 A
- WO 2014115775 A1
- WO 2018193095 A1
- JP 2003158842 A
- JP 2011067069 A
- JP 8182271 A